# EUROPÄISCHE PATENTSCHRIFT

(11) **EP 3 650 192 B1**
(45) Veröffentlichungstag und Bekanntmachung des Hinweises auf die Patenterteilung: **14.09.2022**
(21) Anmeldenummer: 18205701.8
(22) Anmeldetag: 12.11.2018
(51) Int. Cl.: B29C 45/26, F02M 37/10, F02M 37/08, B29C 45/44, B29L 1/00, F02M 37/04

(54) **SCHRAUBENFÖRMIGES KRAFTSTOFFFÖRDERELEMENT**
HELICAL FUEL PUMPING ELEMENT
ÉLÉMENT DE TRANSPORT DE CARBURANT SOUS LA FORME DE VIS

(43) Veröffentlichungstag der Anmeldung: 13.05.2020
(73) Patentinhaber: TI Automotive Technology Center GmbH, 76437 Rastatt (DE)
(72) Erfinder: Deibel, Florian, 76547 Sinzheim (DE); Boecker, Albert J., 76275 Ettlingen (DE)
(74) Vertreter: dompatent von Kreisler Selting Werner - Partnerschaft von Patent- und Rechtsanwälten mbB

(56) Entgegenhaltungen:
- EP-A1- 0 657 640
- DE-A1-102011 010 442

## Beschreibung

Die Erfindung betrifft ein schraubenförmiges Kraftstoffförderelement sowie eine Verfahren zum Herstellen eines solchen. Weiterhin betrifft die Erfindung eine Kraftstoffpumpe mit einem schraubenförmigen Kraftstoffförderelement.

Aus dem Stand der Technik ist es bekannt, schraubenförmige Kraftstoffförderelemente aus Metall zu verwenden, die mit geringen Toleranzen hergestellt werden können. Diese weisen in der Herstellung erhöhte Kosten auf. Das Einhalten von geringen Toleranzen ist wichtig, eine gute Förderleistung zu erzielen und mit einem ausreichend hohen Druck befördern zu können.

Aufgabe der Erfindung ist es, ein schraubenförmiges Kraftstoffförderelement bereitzustellen, das aus Kunststoff hergestellt werden kann und geringe Fertigungstoleranzen aufweist. Ferner ist es Aufgabe der Erfindung, ein geeignetes Verfahren zur Herstellung eines solchen schraubenförmigen Kraftstoffförderelements aus Kunststoff bereitzustellen.

EP 0 657 640 A1 offenbart ein schraubenförmiges Kraftstoffförderelement für eine Kraftstoffpumpe, wobei im Impeller eine Öffnung vorgesehen ist, durch die ein Schaft geführt ist.

DE 10 2011 010 442 A1 beschreibt ein Verfahren zum Herstellen eines Spritzgussteils in einer schraubenförmigen Kavität.

Die Lösung der Aufgabe erfolgt erfindungsgemäß durch die Merkmale der Ansprüche 1 und 9.

Das erfindungsgemäße schraubenförmige Kraftstoffförderelement für eine Kraftstoffpumpe weist ein Schraubenantriebselement aus Kunststoff auf, das von einem axialen Ende des schraubenförmigen Kraftstoffförderelements aus zugänglich ist. Bei diesem Schraubenantriebselement handelt es sich um ein Element, das rotationsfest mit einem Werkzeug, beispielsweise einem Schraubenzieher oder einem Schraubenschlüssel, verbunden werden kann beziehungsweise in Eingriff gebracht werden kann, so dass bei einem Drehen des Werkzeuges ein Drehen des schraubenförmigen Kraftstoffförderelements um seine Mittelachse erfolgt. Hierdurch ist es beispielsweise möglich, das schraubenförmige Kraftstoffförderelement aus einer Spritzgussform herauszuschrauben, sodass das schraubenförmige Kraftstoffförderelement mit lediglich einer Spritzgussform hergestellt werden kann, aus der es nach dem Aushärten herausgeschraubt werden kann.

Hierzu ist es bevorzugt, dass das schraubenförmige Kraftstoffförderelement in der Richtung, in der es herausgeschraubt wird, keine Hinterschneidungen aufweist, sodass es durch ein einfaches Rotieren aus der Spritzgussform herausgeschraubt werden kann.

Erfindungsgemäß ist es möglich, das schraubenförmige Kraftstoffförderelement aus Kunststoff herzustellen, ohne dass dieses einen Formgrat aufweist.

Es ist bevorzugt, dass das Schraubenantriebselement einstückig mit dem schraubenförmigen Kraftstoffförderelement ausgebildet ist.

Weiterhin ist es bevorzugt, dass das Kraftstoffförderelement und das Schraubenantriebselement einstückig als Spritzgussteil ausgebildet sind.

Es ist weiterhin bevorzugt, dass das schraubenförmige Kraftstoffförderelement an einem axialen Ende eine insbesondere zylindrische Aussparung aufweist, an deren proximalen Ende, das heißt an deren Boden das Schraubenantriebselement angeordnet ist.

Es ist weiterhin bevorzugt, dass in der Aussparung ein Stift, insbesondere ein Metallstift, eingesetzt ist, dessen ein axiales Ende über das axiale Ende des schraubenförmigen Kraftstoffförderelements hinausragt.

Weiterhin ist es bevorzugt, dass der Metallstift mit dem schraubenförmigen Kraftstoffförderelement durch Presspassung verbunden ist.

Weiterhin ist es erfindungsgemäß vorgesehen, dass das Schraubenantriebselement als Innen-Torx oder Innen-Sechskant ausgebildet ist.

Es ist weiterhin bevorzugt, dass das zum Kraftstoffförderelement gerichtete axiale Ende des Stifts konisch ausgebildet ist. Hierdurch kann eine automatische Zentrierung des Stifts relativ zum Kraftstoffförderelement erfolgen.

Die Erfindung betrifft ferner eine Kraftstoffpumpe mit einem Kraftstoffeinlass, einem Kraftstoffauslass und einer Antriebsvorrichtung zum Antreiben des schraubenförmigen Kraftstoffförderelements. Ferner umfasst die Kraftstoffpumpe ein schraubenförmiges Kraftstoffförderelement, wie es in der vorliegenden Anmeldung beschrieben ist. Hierbei dient der Stift in der Aussparung als Axiallager für das Kraftstoffförderelement.

Die Erfindung betrifft ferner ein Verfahren zum Herstellen eines schraubenförmigen Kraftstoffförderelements, insbesondere wie es in der vorliegenden Anmeldung beschrieben ist. Das Verfahren umfasst die folgenden Schritte:
Zunächst wird eine Spritzgussform mit einer schraubenförmigen Kavität vorgesehen. In diese Kavität wird ein thermoplastisches Material eingeführt. Die Kavität wird anschließend mit einem Deckel verschlossen. Nach der Aushärtung des thermoplastischen Materiales wird der Deckel geöffnet. Ein Werkzeug, beispielsweise ein Schraubenzieher oder Schraubenschlüssel, wird formschlüssig mit einem Schraubenantriebselement beispielsweise einem Schraubenkopf, das vom axialen Ende des Kraftstoffförderelements auszugänglich ist, verbunden, sodass das Kraftstoffförderelement aus der Kavität herausgedreht werden kann.

Im Folgenden werden bevorzugte Ausführungsformen der Erfindung an Hand von Figuren erläutert.

Es zeigen:

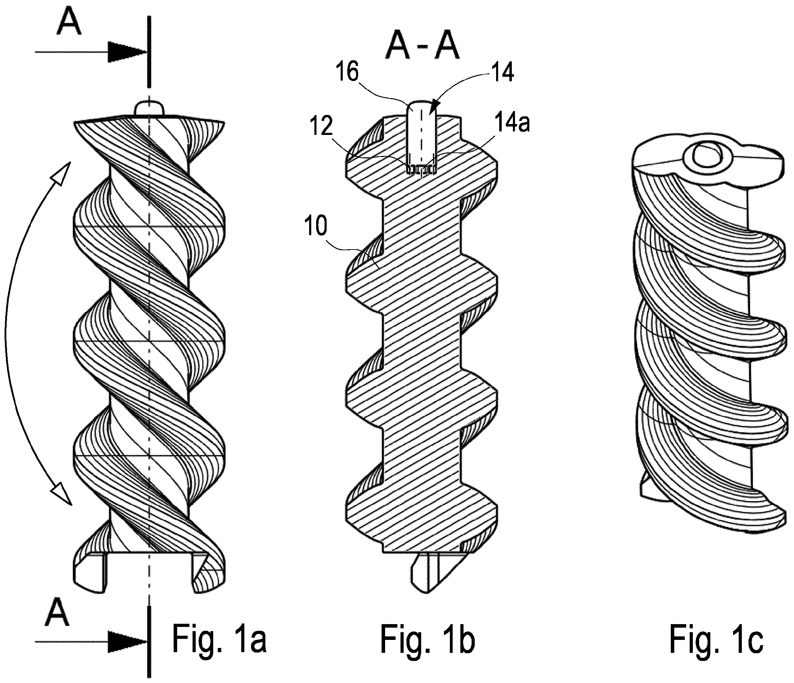

Figuren 1a bis 1c verschiedene Ansichten eines erfindungsgemäßen schraubenförmigen Kraftstoffförderelements.

Wie in Figur 1a erkennbar ist das Kraftstoffförderelement 10 schraubenförmig ausgebildet. In Figur 1a sind vier Gewindesteigungen dargestellt.

Figur 1b zeigt eine geschnittene Ansicht des erfindungsgemäßen Kraftstoffförderelements 10. An seinem oberen Ende ist eine zylindrische Aussparung 14 vorgesehen, an deren Boden 14a das Schraubenantriebselement 12 angeordnet ist. Dieses ist im dargestellten Ausführungsbeispiel als Innen-Torx ausgebildet.

In der Aussparung 14 ist durch Presspassung der Metallstift 16 befestigt, dessen unteres Ende konisch ausgebildet ist und der somit relativ zum Kraftstoffförderelement 10 zentriert wird. Bei der Verwendung des Kraftstoffförderelements 10 in einer Kraftstoffpumpe dient der Metallstift 16 als Axiallager. Die Rotation von einer nicht dargestellten Antriebsvorrichtung kann über ein Formschlusselement am unteren Ende des Kraftstoffförderelements 10 übertragen werden. In Figur 14 und 1c ist dasselbe Kraftstoffförderelement 10 in einer perspektivischen Ansicht dargestellt.

## Patentansprüche

1. Schraubenförmiges Kraftstoffförderelement (10) für eine Kraftstoffpumpe,
mit einem Schraubenantriebselement (12), das von einem axialen Ende des schraubenförmigen Kraftstoffförderelements (10) aus zugänglich ist,
**dadurch gekennzeichnet, dass** das Schraubenantriebselement (12) als Innen-Torx oder Innen-Sechskant ausgebildet ist.

2. Schraubenförmiges Kraftstoffförderelement (10) nach Anspruch 1, **dadurch gekennzeichnet, dass** das Schraubenantriebselement (12) einstückig mit dem schraubenförmigen Kraftstoffförderelement (10) ausgebildet ist.

3. Schraubenförmiges Kraftstoffförderelement (10) nach Anspruch 1 oder 2, **dadurch gekennzeichnet, dass** das Kraftstoffförderelement (10) und das Schraubenantriebselement (12) einstückig als Spritzgussteil ausgebildet sind.

4. Schraubenförmiges Kraftstoffförderelement (10) nach Anspruch 1 bis 3, **dadurch gekennzeichnet, dass** das Kraftstoffförderelement (10) an einem axialen Ende eine insbesondere zylindrische Aussparung (14) aufweist, an deren proximalen Ende (14a), das heißt an deren Boden das Schraubenantriebselement (12) angeordnet ist.

5. Schraubenförmiges Kraftstoffförderelement (10) nach Anspruch 4, **dadurch gekennzeichnet, dass** in der Aussparung (14) ein Stift (16), insbesondere ein Metallstift, eingesetzt ist, dessen ein axiales Ende über das axiale Ende des Kraftstoffförderelements (10) hinausragt.

6. Schraubenförmiges Kraftstoffförderelement (10) nach Anspruch nach 5, **dadurch gekennzeichnet, dass** das Kraftstoffförderelement (10) mit dem Stift (16) durch Presspassung verbunden sind.

7. Schraubenförmiges Kraftstoffförderelement (10) nach Anspruch 5 bis 6, **dadurch gekennzeichnet, dass** das zum Kraftstoffförderelement (10) gerichtete axiale Ende des Stifts 16 konisch ausgebildet ist.

8. Kraftstoffpumpe,
mit einem Kraftstoffeinlass,
einem Kraftstoffauslass,
einer Antriebsvorrichtung,
einem schraubenförmigen Kraftstoffförderelement (10), nach einem der Ansprüche 5 oder 6,
wobei der Stift (16) als Axiallager für das Kraftstoffförderelement (10) dient.

9. Verfahren zum Herstellen eines schraubenförmigen Kraftstoffförderelements (10), mit den folgenden Verfahrensschritten:
Vorsehen einer Spritzgussform mit einer schraubenförmigen Kavität
Einführen eines thermoplastischen Materials in die Kavität Verschließen der Kavität mit einem Deckel,
nach dem Aushärten des thermoplastischen Materials, Öffnen des Deckels und Herausschrauben des Kraftstoffförderelements (10) aus der Kavität durch formschlüssiges Verbinden eines Werkzeugs mit einem Schraubenantriebselement (12), das vom axialen Ende des Kraftstoffförderelements (10) aus zugänglich ist.

## Claims

1. Helical fuel pumping element (10) for a fuel pump,
comprising a helical drive element (12) accessible from an axial end of the helical fuel pumping element (10),
**characterized in that** the helical drive element (12) is designed as an internal torx or a hexagon socket.

2. Helical fuel pumping element (10) according to claim 1, **characterized in that** the helical drive element (12) is formed integrally with the helical fuel pumping element (10).

3. Helical fuel pumping element (10) according to claim 1 or 2, **characterized in that** the fuel pumping element (10) and the helical drive element (12) are formed integrally as an injection molded part.

4. Helical fuel pumping element (10) according to claims 1 to 3, **characterized in that** the fuel pumping element (10) has an in particular cylindrical recess (14) at an axial end thereof, at the proximal end (14a) of which, i.e. at the bottom of which, the helical drive element (12) is arranged.

5. Helical fuel pumping element (10) according to claim 4, **characterized in that** a pin (16), in particular a metal pin, is inserted into the recess (14), the axial end thereof extending beyond the axial end of the fuel pumping element (10).

6. Helical fuel pumping element (10) according to claim 5, **characterized in that** the fuel pumping element (10) is connected to the pin (15) by press fitting.

7. Helical fuel pumping element (10) according to claims 5 to 6, **characterized in that** the axial end of the pin (16) directed towards the fuel pumping element (10) is formed conical.

8. Fuel pump
comprising a fuel inlet,
a fuel outlet,
a drive means,
a helical fuel pumping element (10) according to one of claims 5 or 6,
wherein the pin (16) serves as an axial bearing for the fuel pumping element (10).

9. Method for producing a helical fuel pumping element (10) comprising the following method steps:
providing an injection mold with a helical cavity,
introducing a thermoplastic material into the cavity,
closing the cavity with a lid,
after the thermoplastic material has cured, opening the lid and screwing the fuel pumping element (10) out from the cavity by positively connecting a tool with a helical drive element (12) accessible from the axial end of the fuel pumping element (10).

## Revendications

1. Élément hélicoïdal transporteur de carburant (10) pour une pompe à carburant,
doté d'un élément d'entraînement (12), lequel est accessible depuis une extrémité axiale de l'élément hélicoïdal transporteur de carburant (10),
**caractérisé en ce que** l'élément d'entraînement (12) est réalisé avec une empreinte Torx ou hexagonale.

2. Élément hélicoïdal transporteur de carburant (10) selon la revendication 1, **caractérisé en ce que** l'élément d'entraînement (12) est réalisé d'une seule pièce avec l'élément hélicoïdal transporteur de carburant (10).

3. Élément hélicoïdal transporteur de carburant (10) selon la revendication 1 ou 2, **caractérisé en ce que** l'élément transporteur de carburant (10) et l'élément d'entraînement à vis (12) sont réalisés d'une seule pièce moulée par injection.

4. Élément hélicoïdal transporteur de carburant (10) selon la revendication 1 à 3, **caractérisé en ce que** l'élément transporteur de carburant (10) comporte à une extrémité axiale un évidement (14) en particulier cylindrique, à l'extrémité proximale (14a) duquel, c'est-à-dire au fond duquel, est disposé l'élément d'entraînement (12).

5. Élément hélicoïdal transporteur de carburant (10) selon la revendication 4, **caractérisé en ce qu'**une broche (16), en particulier une broche métallique, dont une extrémité axiale dépasse au-dessus de l'extrémité axiale de l'élément transporteur de carburant (10), est insérée dans l'évidement (14).

6. Élément hélicoïdal transporteur de carburant (10) selon la revendication à 5, **caractérisé en ce que** l'élément transporteur de carburant (10) et la broche (16) sont reliés par ajustement serré.

7. Élément hélicoïdal transporteur de carburant (10) selon la revendication 5 à 6, **caractérisé en ce que** l'extrémité axiale de la broche (16) dirigée vers l'élément transporteur de carburant (10) est réalisée comme conique.

8. Pompe à carburant,
dotée d'une entrée de carburant,
d'une sortie de carburant,
d'un dispositif d'entraînement,
d'un élément hélicoïdal transporteur de carburant (10) selon l'une des revendications 5 ou 6,
dans laquelle la broche (16) sert de palier axial pour l'élément transporteur de carburant (10).

9. Procédé de fabrication d'un élément hélicoïdal transporteur de carburant (10), avec les étapes de procédé suivantes :
provision d'un moule d'injection doté d'une cavité hélicoïdale
introduction un matériau thermoplastique dans la cavité
fermeture de la cavité avec un couvercle,
après le durcissement du matériau thermoplastique, ouverture du couvercle et extraction de l'élément transporteur de carburant (10) hors de la cavité par dévissage, au moyen d'une liaison par complémentarité de formes d'un outil avec un élément d'entraînement (12), lequel est accessible depuis l'extrémité axiale de l'élément transporteur de carburant (10).
